# EUROPÄISCHE PATENTSCHRIFT

(11) **EP 3 063 699 B1**
(45) Veröffentlichungstag und Bekanntmachung des Hinweises auf die Patenterteilung: **16.01.2019**
(21) Anmeldenummer: 14758994.9
(22) Anmeldetag: 05.09.2014
(51) Int. Cl.: G06K 7/10, G06K 7/00

(54) **LESEGERÄT**
READING APPARATUS
APPAREIL DE LECTURE

(30) Priorität: 01.11.2013 DE 102013222273
(43) Veröffentlichungstag der Anmeldung: 07.09.2016
(73) Patentinhaber: Bundesdruckerei GmbH, 10969 Berlin (DE)
(72) Erfinder: MAGGIONI, Christoph, 10961 Berlin (DE)
(74) Vertreter: Richardt Patentanwälte PartG mbB
(86) Internationale Anmeldenummer: PCT/EP2014/069001
(87) Internationale Veröffentlichungsnummer: WO 2015/062770

(56) Entgegenhaltungen:
- EP-A2- 0 161 601
- US-A1- 2007 095 928
- US-A1- 2007 253 419

## Beschreibung

Die vorliegende Erfindung betrifft ein Lesegerät zur Erfassung von Sicherheitsdokumenten mit einem integrierten RFID-Transponder durch optisches Abtasten oberflächlicher Merkmale und den Austausch von Daten mit dem RFID-Transponder durch elektromagnetische Signale.

Aus dem Stand der Technik sind Sicherheitsdokumente mit einem integrierten RFID-Transponder in sehr unterschiedlichem Aufbau und zu sehr unterschiedlichen Zwecken bekannt, insbesondere in Form von Chipkarten, beispielsweise zur Realisierung einer elektronischen Geldbörse oder für e-Ticketing, oder in der Form von papierbasierten Dokumenten, wie zum Beispiel Banknoten und Ausweisdokumenten.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie. Die auf einem RFID-Transponder gespeicherten Daten werden typisch über elektromagnetische Wellen und insbesondere Radiowellen verfügbar gemacht. Bei niedrigeren Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv/aktiv), dem benutzten Frequenzband, der Sendestärke und anderen Umwelteinflüssen zwischen ca. einem Zentimetern und mehr als einem Kilometer. Hinsichtlich der Kommunikation über ein Nahfeld unterscheidet man zwischen "Proximity Coupling" (vgl. hierzu ISO 14443) und "Close Coupling" (vgl. hierzu ISO 10536). In beiden Fällen erfolgt das Auslesen des RFID-Transponders induktiv über ein Nahfeld.

Die Druckschrift DE 201 00 158 U1 offenbart eine Identifikations- und Sicherheitskarte aus laminierten und/oder gespritzten Kunststoffen, die einen integrierten Halbleiter mit einer Antenne zur Durchführung eines RFID-Verfahrens beinhaltet.

Damit bei solchen Sicherheitsdokumenten nicht ohne Einverständnis des Besitzers die RFID-Schnittstelle angesprochen werden kann, sind Schutzmechanismen zum Schutz gegen unbefugtes Auslesen der Daten bekannt, u.a. das sog. *Basic Access Control (BAC)*, das von der International Civil Aviation Organisation (ICAO) standardisiert ist. Darüber hinaus hat die ICAO bzw. die EU auch Verfahren zur so genannten *Extended Access Control (EAC)* und zur *Active Authentication (AA)* spezifiziert. Durch solche Verfahren soll das Auslesen von sensitiven Daten, die in dem RFID Chip des Dokuments gespeichert sind, besonders geschützt werden (EAC) bzw. die Authentizität des Chips im Pass nachgewiesen werden (AA). Insbesondere biometrische Daten, wie z.B. Fingerabdruckdaten, sollen so vor unberechtigten Zugriffen geschützt werden. Es ist bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 genormt sind. Zu den Anwendungsgebieten der Chipkartentechnologie gehören auch maschinenlesbare Reisedokumente (Machine Readable Travel Documents - MRTD).

Die Druckschriften DE 10 2005 025 806 A1 und DE 10 2006 027 253 A1 offenbaren maschinenlesbare Dokumente, in denen durch eine in dem integrierten Schaltkreis des Dokuments gespeicherte Zuordnungstabelle für verschiedene in dem integrierten Schaltkreis gespeicherte Datenobjekte spezifiziert ist, welches kryptographische Protokoll zur Erfüllung einer Zugriffsbedingung zum externen Auslesen des betreffenden Datenobjekts erfüllt sein muss. Hierbei können auch asymmetrische kryptographische Protokolle zum Einsatz kommen, die ein Schlüsselpaar bestehend aus einem öffentlichen Schlüssel und einem privatem Schlüssel erfordern. Zur Durchführung des kryptographischen Protokolls wird zunächst optische eine Kennung von einer Oberfläche des Sicherheitsdokuments erfasst.

Die Druckschrift DE 10 2005 062 827 A1 offenbart ein maschinenlesbares Dokument, insbesondere einen elektronischen Reisepass, der mehrere RFID-Transponder beinhaltet. Beispielsweise beinhaltet der elektronische Reisepass mehrere eingeklebte Visa, wobei jedes Visum einen separaten RFID-Transponder aufweist.

Die Druckschrift US 2006/0065714 A1 offenbart ein Lesegerät für Reisepässe mit einem integrierten RFID-Transponder. Das Lesegerät weist ein Gehäuse mit einer Halteeinrichtung für den Reisepass auf, in dessen Innenraum eine optische Abtasteinrichtung und eine Antenneneinrichtung untergebracht sind. Die optische Abtasteinrichtung umfasst eine Kamera und Spiegel, um eine auf das Vorlagenglas der Halteeinrichtung aufgelegte Seite des Reisepasses oberflächlich optisch abzutasten. Die Antenneneinrichtung umfasst zwei Antennen, die zur Übertragung von elektromagnetischen (Hochfrequenz)Signalen an die in den Reisepass integrierte(n) Antenne(n) des RFID-Transponders eingerichtet sind.

Die Druckschrift WO 2008/040608 A1 offenbart ein Lesegerät für ein Sicherheitsdokument mit mindestens einem RFID-Transponder, mit einer ersten Auflagefläche für eine erste Seite des Sicherheitsdokuments und einer zweiten Auflagefläche für eine zweite Seite des Sicherheitsdokuments, einer ersten Antenne, die unterhalb der ersten Auflagefläche angeordnet ist, und einer zweiter Antenne, die unterhalb der zweiten Auflagefläche angeordnet ist, wobei die ersten und zweiten Antennen jeweils zum induktiven Auslesen des zumindest einen RFID-Transponders über ein Nahfeld ausgebildet sind. Ferner umfasst dieses Lesegerät einen optischen Sensor, mit dem ein Bild eines kleinen Ausschnitts einer Seite des Sicherheitsdokuments möglich ist.

Die Druckschrift DE 100 28 241 A1 offenbart ein Lesegerät zum optischen Abtasten von Sicherheitsdokumenten mit zusätzlichen Echtheitsmerkmalen. Bei diesem Lesegerät befindet sich der zur optischen Abtastung des Normallichtbildes vorgesehene Teil der optischen Einheiten, nämlich die Fotodiodenzeile, auf einem Schlitten, der in einer quer zu deren Erstreckung verlaufenden Richtung unter einem Vorlagenglas bewegbar ist. Zusätzlich weist dieses Lesegerät an dem Schlitten einen in einer weiteren Richtung bewegbaren Schieber auf, der den zur Auswertung der Echtheitsmerkmale erforderlichen zweiten Teil der optischen Komponenten trägt. Dieses Lesegerät zeichnet sich durch eine hohe Erfassungsqualität aus, weil die optischen Einheiten sehr nah an der abzutastenden Oberfläche lokalisiert sind oder lokalisiert werden können.

Die Druckschrift US 2007/253419 A1 beschreibt ein Kommunikationsendgerät, welches Bilddaten gemäß Zielinformationen an ein Ziel überträgt, wenn ein RF-Lesegerät die Zielinformationen von einem RFID-Tag abruft, welches an einem Originaldokument angebracht ist. Anspruch 1 ist gegenüber die sem Dokument abgegrenzt.

Die Druckschrift US 2007/095928 A1 beschreibt ein physisches Objekt, welches eine oder mehrere Speicherschaltungen umfasst, die dazu angepasst sind drahtlos von einem an oder innerhalb des physischen Objekts angeordneten Lesegerät gelesen zu werden. Daten in der Speicherschaltung sind vor einem Zugriff durch einen nicht autorisierten Leser geschützt. Die Daten in der Speicherschaltung sind zudem dazu angepasst einen autorisierten Träger des physischen Objekts zu identifizieren. Darüber hinaus sind die Daten in der Speicherschaltung dazu angepasst Zugriff auf einen bestimmten Vermögenswert oder Vermögenswerte durch den autorisierten Träger zu erlauben.

Die Druckschrift EP 0 161 601 A2 beschreibt einen Abtaster in Form eines OCR-Schriftlesers zum automatischen Lesen von leuchtenden Detailabbildungen eines vergrößerten Mikrobildes in einem Mikrofilm-Lesegerät mit einer Bildwand und einem ein Mikrobild auf diese abbildenden Projektionsstrahlengang, wobei der Abtaster eine über die Detailabbildung führbare optische Vorrichtung aufweist, durch die die Detailabbildung abschnittweise auf einen mit der optischen Vorrichtung bewegbaren elektrooptischen Empfänger abbildbar ist.

Die Aufgabe, mit einem möglichst einfach aufgebauten Lesegerät eine Vielzahl der gebräuchlichen und zukünftigen Sicherheitsdokumente mit integriertem RFID-Transponder erfassen zu können, wird mit dem Stand der Technik nicht zufriedenstellend gelöst.

Wesentlich besser gelöst wird diese Aufgabe durch ein Lesegerät für ein Sicherheitsdokument mit einem integrierten RFID-Transponder mit den Merkmalen des Anspruchs 1 und ein Verfahren zum Erfassen eines Sicherheitsdokuments mit einem integrierten RFID-Transponder mit den Merkmalen des Anspruchs 13. Zusätzliche vorteilhafte Ausgestaltungen und Weiterbildungen sind in den jeweils abhängigen Unteransprüchen angegeben.

Grundsätzlich vorgeschlagenen wird eine Möglichkeit zur Bewegung der Antenneneinrichtung gegenüber der Halteeinrichtung des Lesegeräts. Dabei wird als "Antenneneinrichtung" eine Anordnung mit einer oder mehreren Wicklungen verstanden. Der Begriff "Wicklungen" bedeutet keine Einschränkung auf Leiterschleifen mit mehreren Windungen. Wicklungen können vorliegend insbesondere auch einfache Leiterschleifen oder ähnliche weitgehend geschlossene Leitergebilde sein. Mit der Bewegung der Antenneneinrichtung kann die Position, an der eine Wicklung der Antenneneinrichtung für die Übertragung der elektromagnetischen Signale an den RFID-Transponder des auf der Halteeinrichtung angeordneten Sicherheitsdokuments zur Verfügung steht, in jedem Erfassungsvorgang neu ausgewählt und festgelegt werden. Das macht nicht nur die genaue manuelle Ausrichtung des Sicherheitsdokuments in Bezug auf das Lesegerät überflüssig sondern auch die dazu typisch vorgesehenen formatspezifischen Positionierhilfen. Ein Lesegerät ohne formatspezifisch ausgestaltete Halteeinrichtung eignet sich vorteilhaft zur Erfassung von neuartigen oder fremden Sicherheitsdokumenten in anderen Formaten.

Die als weitere eigenständige Ausgestaltung vorgeschlagene Bewegung der Antenneneinrichtung mittels der optischen Abtasteinrichtung oder zusammenhängend mit dieser zielt insbesondere auf einen sehr einfachen Aufbau mit einem gemeinsamen Schlitten. Dieser lässt sich auf sehr kostengünstige Weise realisieren, indem ein gebräuchlicher CIS-Flachbettscanner durch die Antenneneinrichtung ergänzt wird. Dabei können die meisten Baugruppen und Bauelemente unverändert übernommen werden. Insbesondere dürften tiefgreifende Anpassungen an Gehäuse, Schlitten, Optik und Vorlagenglas/Vorlagenhalter in der Regel entbehrlich sein.

Die zusätzliche relative Bewegbarkeit der Antenneneinrichtung in Bezug auf die Abtasteinrichtung erlaubt eine Festlegung der Position der der für die Übertragung der elektromagnetischen Signale an den darin integrierten RFID-Transponder verwendeten Wicklung in einem besonders weiten Umfang.

Die als weitere eigenständige Ausgestaltung vorgeschlagene Anordnung der Abtasteinrichtung zwischen der Halteeinrichtung und der Antenneneinrichtung vermeidet vorteilhaft eine Beeinträchtigung des optischen Abtastvorgangs durch Schattenwurf oder Abdeckung durch die Antenneneinrichtung.

Die als weitere eigenständige Ausgestaltung vorgeschlagene Antenneneinrichtung mit mehreren zueinander versetzten Wicklungen erlaubt eine Auswahl der Position durch einen Umschaltvorgang und erübrigt mechanische Antriebseinrichtungen, erlaubt eine Verkürzung des Verfahrwegs oder die Bereitstellung von Wicklungen mit unterschiedlicher Gestalt zur Auswahl. Mit der darauf aufbauend vorgeschlagenen überlappenden Anordnung der Wicklungen der Antenneneinrichtung lässt sich die ausgewählte Position noch genauer einstellen.

Die als weitere eigenständige Ausgestaltung vorgeschlagene rechteckige und flache Form der Wicklungen der Antenneneinrichtung bietet vorteilhaft eine besonders gute Kopplung an die typische Form der Antennen der RFID-Transponder in den gebräuchlichen Sicherheitsdokumenten.

Die als weitere eigenständige Ausgestaltung vorgeschlagenen Maßnahmen zur optischen Abtastung von Bildern der betreffenden Oberfläche des Sicherheitsdokument in einer Beleuchtung mit wahlweise weißem Mischlicht, Infrarotlicht und Ultraviolettlicht erlauben die Erfassung sowohl sichtbarer als auch unsichtbarer Beschriftungen und Sicherheitsmerkmale. Darauf aufbauend wird eine Beleuchtung mit einer vorzugsweise gruppierten Anordnung von Leuchtdioden (LED) vorgeschlagen, womit sich eine besonders hohe Lebensdauer und Stoßunempfindlichkeit ergibt.

Als weitere eigenständige Ausgestaltung des Lesegeräts wird ein Steuerungseinrichtung vorgeschlagen mit Mitteln, um aus den Daten des optisch erfassten Bildes von der Oberfläche des Sicherheitsdokuments eine Position der für die Übertragung von elektromagnetischen Signalen zu dem RFID-Transponder des Sicherheitsdokuments verwendeten Wicklung der Antenneneinrichtung abzuleiten, wodurch ein sehr weitgehend automatisierter Erfassungsvorgang möglich wird.

Als weitere eigenständige Ausgestaltung des Lesegeräts mit der Steuerungseinrichtung werden Mittel zur Durchführung eines kryptografischen Protokolls vorgeschlagen, mit denen ein zum Zugriff auf die Daten in einem RFID-Transponder eines Sicherheitsdokuments erforderliches Protokoll ausführbar ist. Dadurch kann das Lesegerät auch mit Sicherheitsdokumenten verwendet werden, die den Zugriff auf die in dem RFID-Transponder enthaltenen Daten bei der Erfassung nur nach der Durchführung eines kryptografischen Protokolls freigeben. Darauf aufbauend wird eine weitere Ausgestaltung des Steuergeräts vorgeschlagenen, die Mittel umfasst, um aus den Daten eines optisch abgetasteten Bildes von der Oberfläche des Sicherheitsdokuments einen Schlüssel für das kryptografische Protokoll abzuleiten. Dadurch ergibt sich vorteilhaft ein noch weitergehend automatisierter Erfassungsvorgang.

Zwei Grundformen beispielhafter Lesegeräte werden nachfolgend mit Bezug auf die anhängenden Zeichnungen beschrieben. Darin zeigen:
Fig. 1 Eine schematische Aufsicht auf eine erste Grundform eines beispielhaften Lesegeräts;
Fig. 2 Eine Seitenschnittansicht entlang der in Fig. 1 angegebenen Linie A-A;
Fig. 3 Eine schematische Aufsicht auf eine zweite Grundform eines beispielhaften Lesegeräts;
Fig. 4 Eine Seitenschnittansicht entlang der in Fig. 3 angegebenen Linie A-A; und
Fig. 5 Eine schematische Blockansicht der Steuerungseinrichtung in beiden Grundformen des Lesegeräts.

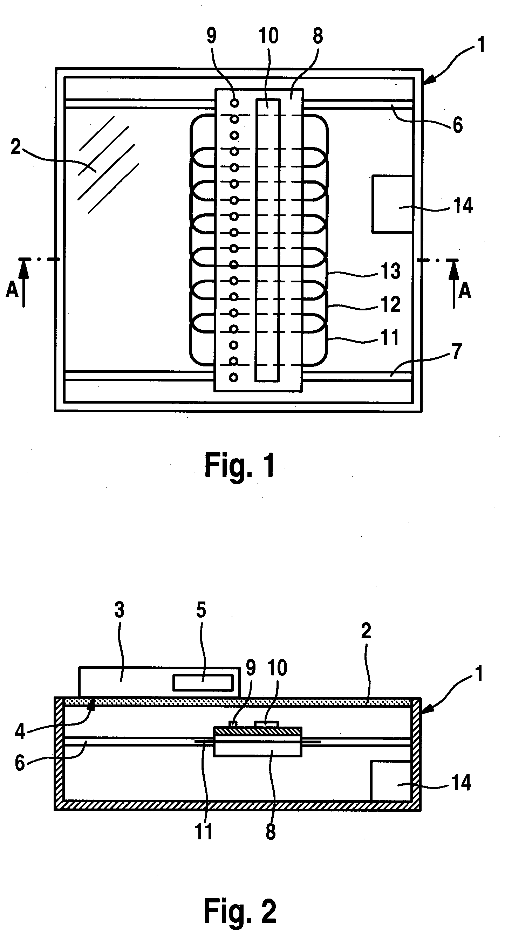

Eine erste Grundform eines beispielhaften Lesegeräts für ein Sicherheitsdokument mit einem integrierten RFID-Transponder (nachfolgend kurz: Sicherheitsdokument) ist in den Figuren 1 und 2 dargestellt. Insbesondere gemäß Fig. 1 ist an dem Gehäuse 1 ist eine Halteeinrichtung 2 ausgebildet, die das zu erfassende Sicherheitsdokument 3 so fixiert, dass die abzutastende Oberfläche 4 des Sicherheitsdokuments 3 oberhalb der Ebene des Zeichenblatts ungefähr parallel dazu nach unten weisend gehalten ist. Im einfachsten Fall kann es sich bei der Halteeinrichtung um ein ebenes Vorlagenglas 2 handeln, auf das die abzutastende Oberfläche 4 des Sicherheitsdokuments 3 von oben aufgelegt wird. Das Gehäuse 1 beinhaltet ferner die Sensoreinheit und deren Kinematik. Letztere umfasst Führungen 6, 7 und einen daran in einer Richtung geradlinig bewegbar geführten Schlitten 8. Der Schlitten 8 ist durch eine zweite Antriebseinrichtung verfahrbar, die in den Zeichnungen nicht dargestellt ist. Der Schlitten 8 wiederum trägt die Sensoreinheit, die eine Abtasteinrichtung 9, 10 zum optischen Abtasten der zugewandten Oberfläche 4 des Sicherheitsdokuments 3 und eine Antenneneinrichtung 11, 12, 13 zum Übertragen elektromagnetischer Signale umfasst.

Hinsichtlich der optischen Abtastung weist das Lesegerät 1 viele Übereinstimmungen mit einem sog. CIS-Flachbettscanner auf. Dabei steht "CIS" steht für engl. *Contact Image Sensor* und bedeutet, dass die optische Abtastung durch eine einzige Fotodiodenzeile geleistet wird. Auch vorliegend setzt sich die Abtasteinrichtung aus einer Fotodiodenzeile 9 und einer vorzugsweise eng daneben angeordneten Beleuchtung 10 zusammen. Gleichfalls in Übernahme der bekannten Bauweise ist die Fotodiodenzeile 9 nicht spektral selektiv empfindlich. Die von der abzutastenden Oberfläche 4 des Sicherheitsdokuments 3 reflektierte spektrale Intensitätsverteilung wird deshalb durch mehrere Abtastvorgänge bei unterschiedlicher Lichtwellenlänge angenähert. Dazu ist die Beleuchtung 10 zur Abgabe von Licht in der erforderlichen Farbe oder spektralen Zusammensetzung steuerbar. Zur Abtastung eines Schwarzweiß-Normallichtbilds kann die Beleuchtung 10 zur Abgabe von weißem Mischfarbenlicht angesteuert werden. Zusätzlich bietet die Beleuchtung 10 die Möglichkeit zu einer Ansteuerung für die Abgabe von ultraviolettem (UV) und/oder infrarotem (IR) Licht. Mit diesem außerhalb des sichtbaren Spektralbereichs liegenden Licht lassen sich weitere Beschriftungen oder Sicherheitsmerkmale abtasten, die aus ästhetischen oder anderen Gründen mit bloßem Auge nicht zu erkennen sein sollen. Die Steuerbarkeit der Beleuchtung 10 wird dadurch erreicht, dass entlang der Fotodiodenzeile 9 eine Anzahl von gruppierten Leuchtdioden (LED) angeordnet ist. Jede Gruppe enthält dabei drei Leuchtdioden, von denen eine ein weißes Mischfarbenlicht und jeweils eine weitere das benötigte ultraviolette und infrarote Licht abstrahlt. Die Anzahl der Leuchtdioden ist dabei so bemessen, dass sich gegebenenfalls in Verbindung mit einem geeigneten Diffusor eine gleichmäßige Bestrahlung der abzutastenden Oberfläche ergibt. Die vorangehend beschriebenen Details der Beleuchtung sind in den schematischen Zeichnungen nicht dargestellt. Dort ist die Beleuchtung durch einen eng neben der Fotodiodenzeile verlaufenden Streifen 10 angedeutet.

Die weiterhin auf dem Schlitten 8 vorgesehene Antenneneinrichtung umfasst eine Anzahl von fest zum Schlitten 8 angeordneten Wicklungen 11, 12, 13. Zur Vereinfachung sind vorliegend nur drei dieser Wicklungen bezeichnet. Alle Wicklungen 11, 12, 13,... haben ungefähr dieselbe ebene und annähernd rechteckige und vorzugsweise quadratische Form und liegen annähernd parallel zu der Oberfläche 4 des Sicherheitsdokuments 3 auf der davon abgewandten Seite der optischen Abtasteinrichtung 9, 10. Wegen der Miniaturisierung der Abtasteinrichtung 9, 10 und deren geringem Abstand zur Oberfläche 4 des Sicherheitsdokuments 3 ergibt sich für die Wicklungen 11, 12, 13 noch eine ausreichend kurze Distanz zu einer hinter der Oberfläche 4 liegenden Antenne eines integrierten RFID-Transponders 5. Weiterhin sind die Wicklungen 11, 12, 13 paarweise überlappend und vorzugsweise äquidistant entlang der Richtung der Abtasteinrichtung 9, 10 angeordnet.

Durch den vorab beschriebenen Aufbau und die Anordnung der Antenneneinrichtung 11, 12, 13 ist es möglich, zum Datenaustausch zwischen dem Lesegerät 1 und dem RFID-Transponder 5 des Sicherheitsdokuments 3 die Position der zur Übertragung der elektromagnetischen Signale verwendete Wicklung der Antenneneinrichtung in Bezug auf die Oberfläche 4 des Sicherheitsdokuments 3 einzustellen. Diese Einstellung wird erreicht durch das Verfahren des Schlittens 8 und die Auswahl einer Wicklung 11, 12, 13. Da sich der Schlitten 8 entlang seiner Verfahrrichtung auch praktisch nahezu kontinuierlich verstellen lässt, ist in diesem Umfang eine nahezu beliebige Einstellung der Position möglich. Wegen der begrenzten Anzahl von Wicklungen auf dem Schlitten 8 ist quer zu dessen Verfahrrichtung nur eine diskrete Positionierung an den Stellen der vorhandenen Wicklungen 11, 12, 13 möglich.

Eine wesentlich vereinfachte Ausgestaltung der Antenneneinrichtung ergibt sich, wenn lediglich eine einzige Wicklung vorsehen wird. Dadurch fällt die Möglichkeit fort, die Position der zur Übertragung der elektromagnetischen Signale verwendeten Wicklung in zwei unabhängigen Richtungen festlegen zu können. Wegen der festen Anordnungen an dem Schlitten ist die Wicklung nur in einer Richtung positionierbar. Deshalb sollte die Wicklung In der anderen Richtung eine Ausdehnung aufweisen, die noch eine ausreichende Überdeckung mit den Antennen der vorgesehenen Sicherheitsdokumente ergibt. Dementsprechend wird die Wicklung in dieser Richtung regelmäßig größer sein als die daran zu koppelnden Antennen der RFID-Transponder. Der sich ergebende Nachteil einer schlechteren Kopplung kann in manchen Anwendungsfällen jedoch hinnehmbar sein. Insbesondere wenn die Halteeinrichtung eine Variation des Dokumentenformats oder der Position des Sicherheitsdokuments nahezu nur in einer Richtung erlaubt, kann eine Anpassung auf die mit dem RFID-Transponder integrierte Antenne in dieser einen Richtung ausreichend sein. Dasselbe gilt für ein Lesegerät, das vorzugsweise für Sicherheitsdokumente in Buchform mit mehreren Seiten verwendet werden soll.

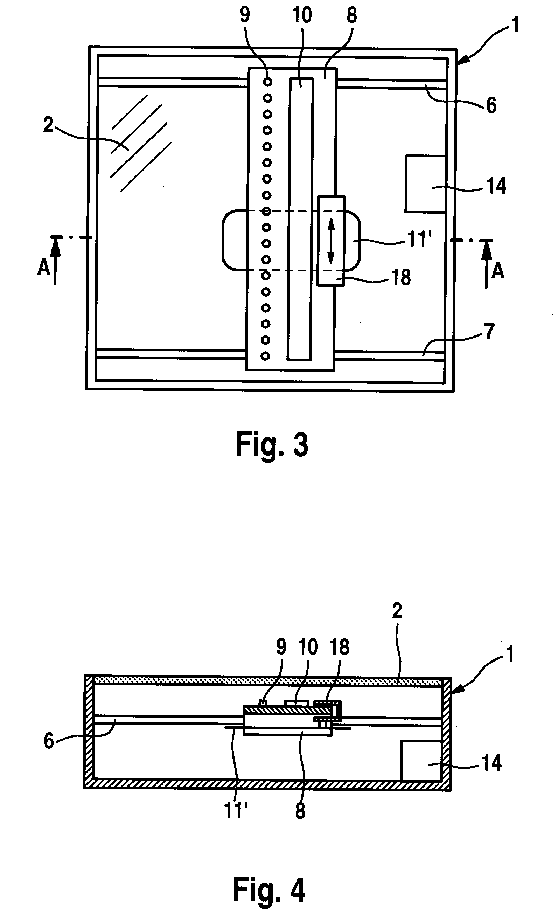

Eine zweite Grundform eines beispielhaften Lesegeräts zeigen die Fig. 3 und 4. Dieses Lesegerät unterscheidet sich von dem als erste Grundform vorangehend beschriebenen nur hinsichtlich der Antenneneinrichtung. Wegen des übereinstimmenden Aufbaus und der Funktionsweise der Halteeinrichtung und der optischen Abtasteinrichtung wird deshalb auf die Erläuterungen zu der ersten Grundform des Lesegeräts verwiesen. Übereinstimmende Einzelheiten sind in den Zeichnungen identisch bezeichnet.

Abweichend von der ersten Grundform des Lesegeräts sieht die Antenneneinrichtung in der zweiten Grundform nur eine einzige bewegbar an dem Schlitten 8 angeordnete Wicklung 11' vor. Dazu ist vorzugsweise an der Unterseite des Schlittens 8 ein kleinerer Schieber 18 angeordnet, der diese Wicklung 11' trägt. Der Schieber 18 ist durch eine zweite Antriebseinrichtung verfahrbar, die in den Zeichnungen nicht dargestellt ist. Dadurch ist die Position der für die Übertragung der elektromagnetischen Signale verwendeten Wicklung, nämlich die der einzigen Wicklung 11', in der zweiten Grundform des Lesegeräts 1 in zwei unterschiedlichen Richtungen auch praktisch nahezu kontinuierlich einstellbar.

Die der ersten und zweiten Grundform unterliegenden Funktionsprinzipien sind keine ausschließlichen Alternativen. Vielmehr sind auch Kombinationen möglich. Insbesondere kann die Antenneneinrichtung des vorangehend als zweite Grundform beschriebenen Lesegeräts mit mehreren Wicklungen ausgestattet werden, die an dem Schieber entlang dessen Verfahrrichtung gegeneinander versetzt angeordnet sind. Dadurch ergibt sich die aus der ersten Grundform bekannte Möglichkeit zur Auswahl einer Wicklung, wodurch sich der notwendige Verfahrweg des Schiebers reduzieren lässt oder mehrere Wicklungen mit unterschiedlicher Gestalt zur Verfügung stehen.

Unabhängig von dem grundsätzlich zur Festlegung der Position der zum Übertragen der elektromagnetische Signale verwendeten Wicklung der Antenneneinrichtung genutzten Prinzip ist eine weitere Ausgestaltung der ersten, zweiten oder kombinierten Grundform durch den Einbau mehrerer Antenneneinrichtungen möglich, die vorzugsweise in der Bewegungsrichtung des Schlittens gegeneinander versetzt angeordnet sind.

Die vorangehend beschriebenen Möglichkeiten zur Einstellung der Position der zur Übertragung der elektromagnetischen Signale verwendeten Wicklung sind wie bereits ausgeführt zur Verbesserung der Übertragung nutzbar. Dazu wird die Position, an der zur Übertragung der elektromagnetischen Signale zur Antenne des RFID-Transponders eine Wicklung der Antenneneinrichtung bereitzustellen ist, mit dem Ziel einer möglichst guten Kopplung ausgewählt. Durch die verbesserte Kopplung ergibt sich bei der Übertragung eine höhere Signalstärke der empfangenen elektromagnetischen Signale. Das macht die Übertragung unempfindlicher gegen Störeinflüsse. Dies setzt allerdings voraus, dass die ausgewählte Position bekannt ist oder jedenfalls eine Näherung dafür auf irgendeinem Weg ermittelt werden kann. Unter den für ein Lesegerät typischen Zielvorgaben an die Zuverlässigkeit und Benutzerfreundlichkeit soll die Position vorzugsweise ohne komplizierte Benutzereingriffe ausgewählt werden.

Für bekannte Sicherheitsdokumente, bspw. Reisepässe, ist die Lage der Antenne des integrierten RFID-Transponders bekannt. Die relativ zu einer für die optische Abtastung in Betracht kommenden Oberfläche des Sicherheitsdokuments zweckmäßig für die Übertragung zu dem oder einem bestimmten darin enthaltenen RFID-Transponder auszuwählende Position der Wicklung der Antenneneinrichtung ist damit gleichfalls bekannt. In einer ersten Näherung wird zur Festlegung dieser Position die Angabe eines Punkts auf der zur Abtastung vorgesehenen Oberfläche ausreichen, auf den das Zentrum oder der Flächenschwerpunkt der zur Übertragung vorgesehenen Wicklung auszurichten ist.

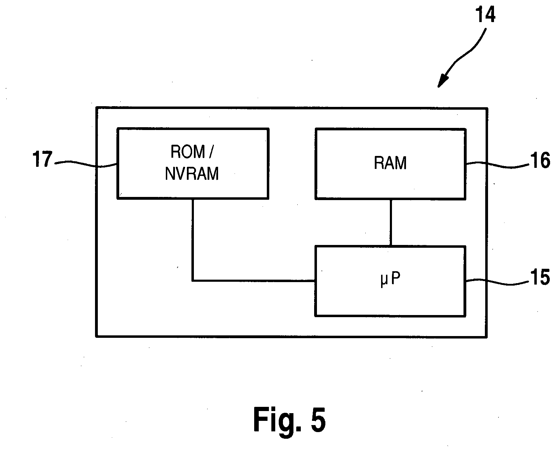

Dies macht es möglich, in den vorangehend beschriebenen beispielhaften Lesegeräten gemäß den Fig. 2, 4 eine Steuerungseinrichtung 14 vorzusehen, die automatisiert für die Übertragung elektromagnetischer Signale zwischen dem Lesegerät 1 und dem RFID-Transponder 5 des Sicherheitsdokuments 3 an einer vorgegebenen Position eine Wicklung der Antenneneinrichtung bereitstellt. In der schematischen Übersicht gemäß Fig. 5 umfasst eine solche Steuerungseinrichtung 14 einen Mikroprozessor 15 mit einem Arbeitsspeicher 16 und einen nicht-flüchtigen Programm- und Datenspeicher 17. In dem Programm- und Datenspeicher 17 sind ein Programm und Vergleichsdaten für den nachfolgend beschriebenen Ablauf enthalten.

Sobald der Benutzer das Sicherheitsdokument 3 in der endgültigen Lage auf dem Lesegerät 1 positioniert und durch eine weitere Bedienhandlung, bspw. einen Knopfdruck, das Erfassen der Daten des Sicherheitsdokuments 3 gestartet hat, wird in einem ersten Schritt eine optische Abtastung eines Bildes von der aufgelegten Oberfläche 4 des Sicherheitsdokuments 3 durchgeführt. Die damit gewonnen Daten werden der Steuerungseinrichtung 14 zugeführt und dort durch einen an sich bekannten Programmteil normalisiert, d.h. in ein senkrechtes und auf einen Bezugspunkt ausgerichtetes Koordinatensystem transformiert. Anschließend wird durch einen weiteren Programmteil eine Korrelation oder eine Mustererkennungsmaßnahme durchgeführt, um die Art des Sicherheitsdokuments zu bestimmen. Die dazu benötigten Vergleichsdaten und Standardmuster werden aus dem Programm- und Datenspeicher 17 gelesen.

Falls im vorangegangenen Schritt eine Übereinstimmung mit einem bekannten Sicherheitsdokument erkannt wurde, liest die Steuerungseinrichtung 14 dazu gleichfalls im Programm- und Datenspeicher 17 abgelegte Daten zu den relativen Koordinaten des Zielpunkts aus und transformiert diese in das Koordinatensystem der tatsächlichen Lage des zu erfassenden Sicherheitsdokuments 3 auf der Halteeinrichtung 2. Gemäß den transformierten Koordinaten bewirkt die Steuerungseinrichtung 14 nachfolgend die Einstellung des Schlittens 8 und die Auswahl einer Wicklung 11, 12, 13 für das als erste Grundform beschriebene beispielhafte Lesegerät bzw. eine geeignete Positionierung der Wicklung 11' mittels des Schiebers 18 für das als zweite Grundform beschriebene beispielhafte Lesegerät. Danach setzt die Steuerungseinheit 14 den Erfassungsvorgang mit dem Versuch einer Kommunikation mit dem RFID-Transponder 5 des Sicherheitsdokuments 3 fort.

Falls der Vergleich des optisch erfassten Bildes von der Oberfläche 4 des Sicherheitsdokuments 3 keine Übereinstimmung mit den hinterlegten Vergleichsdaten und Standardmustern liefert, kann das hinterlegte Programm vorsehen, dass an einer oder mehreren geschätzten Positionen eine Übertragung mit dem dort vermuteten RFID-Transponder 5 versucht wird. Falls auch dies erfolglos bleibt, kann in einer noch weiter entwickelten Variante der Steuerungseinrichtung 14 ein Programmteil vorgesehen sein, der die Position der Wicklung 11, 12, 13; 11' an einer vorab bekannten Position zu der Halteeinrichtung 2 einstellt und den Benutzer durch eine Anzeigeeinrichtung auffordert, das Sicherheitsdokument 3 so in der Halteeinrichtung 2 anzuordnen, dass sich die enthaltene RFID-Transponder 5 möglichst nahe an dieser Position befindet.

Falls gemäß dem gezeigten Aufbau das Zentrum oder der Flächenschwerpunkt der dabei zur Übertragung vorgesehenen Wicklung 11, 12, 13; 11' mit einem Element der Beleuchtung 10 der Abtasteinrichtung zusammenfällt, kann eine sinnvolle Ausgestaltung des Programms einen Schritt vorsehen zum Einschalten dieses Elements als visuelle Anzeige der betreffenden Stelle für den Benutzer.

In einer für die Erfassung und Prüfung von Reisepässen und anderen Identitätsdokumenten mit einem Zugriffschutz auf der Grundlage einer auf der Oberfläche des Sicherheitsdokuments aufgebrachten Kennung wird das im Programm- und Datenspeicher 17 der Steuerungseinrichtung 14 hinterlegte Programm zweckmäßig einen Programmteil enthalten zur Ausführung von Schritten zum Ableiten eines Schlüssels oder einer Kennung aus dem optisch abgetasteten Bild der Oberfläche des Sicherheitsdokuments und zur anschließenden Durchführung eines kryptografischen Protokolls im Rahmen der Kommunikation mit dem RFID-Transponder. Insbesondere kann es sich beim Erfassen eines Personalausweises oder eines Reisepasses bei dem aus den Bilddaten abgeleiteten Schlüssel um in der *Machine Readable Zone (MRZ)* hinterlegte Daten oder die *Card Access Number (CAN)* handeln. Diese Daten werden benötigt als kryptografischer Schlüssel für das zum Zugriff auf die in dem RFID-Transponder gespeicherten Daten notwendige Authentifizierungsprotokoll, insbesondere das sog. *Basic Access Protocol (BAC)* und das sog. *Password Authenticated Connection Establishment (PACE).*

### Bezugszeichenliste

- 1: Gehäuse
- 2: Vorlagenglas
- 3: Sicherheitsdokument
- 4: Abzutastende Oberfläche des Sicherheitsdokuments
- 5: RFID-Transponder des Sicherheitsdokuments
- 6: Führung
- 7: Führung
- 8: Schlitten
- 9: Fotodiodenzeile
- 10: Beleuchtung
- 11: Wicklung
- 12: Wicklung
- 13: Wicklung
- 14: Steuergerät
- 15: Mikroprozessor
- 16: Arbeitsspeicher
- 17: Nichtflüchtiger Programm- und Datenspeicher
- 18: Schieber

## Patentansprüche

1. Lesegerät (1) zur Erfassung von Sicherheitsdokumenten (3) mit einem integrierten RFID-Transponder (4), aufweisend eine Halteeinrichtung (2) zum Ausrichten und Halten des Sicherheitsdokuments, eine Abtasteinrichtung (9, 10) zum optischen Abtasten eines Bildes von einer Oberfläche (4) des Sicherheitsdokuments und eine Antenneneinrichtung (11, 12, 13; 11') zur Übertragung von elektromagnetischen Signalen zwischen dem RFID-Transponder und dem Lesegerät, wobei die Antenneneinrichtung gegenüber der Halteeinrichtung bewegbar ist, **dadurch gekennzeichnet, dass** die Antenneneinrichtung (11, 12, 13; 11') in einer ersten Richtung zusammenhängend mit der Abtasteinrichtung (9, 10) und in einer zweiten Richtung unabhängig von der Abtasteinrichtung (9, 10) bewegbar ist.

2. Lesegerät (1) nach Anspruch 1, wobei die Abtasteinrichtung (9, 10) und die Antenneneinrichtung (11, 12, 13; 11') auf einem gemeinsamen Schlitten (8) angeordnet sind.

3. Lesegerät (1) nach einem der vorangehenden Ansprüche, wobei die Abtasteinrichtung (9, 10) zwischen der Halteeinrichtung (2) und der Antenneneinrichtung (11, 12, 13; 11') angeordnet ist.

4. Lesegerät (1) nach einem der vorangehenden Ansprüche, wobei die Abtasteinrichtung (9, 10) zeilenförmig ist und die Antenneneinrichtung mehrere Wicklungen (11, 12, 13) umfasst, die entlang oder parallel zu der Ausdehnung der zeilenförmigen Abtasteinrichtung (9, 10) angeordnet sind, wobei vorzugsweise sich benachbarte Wicklungen (11, 12, 13) teilweise überlappen.

5. Lesegerät (1) nach einem der vorangehenden Ansprüche, wobei die Antenneneinrichtung eine Anzahl flacher und vorzugsweise rechteckiger Wicklungen (11, 12, 13; 11') umfasst, die in einer zur Ebene der abzubildenden Oberfläche (4) des Sicherheitsdokuments (3) parallelen Ebene verlaufen.

6. Lesegerät (1) nach einem der vorangehenden Ansprüche, wobei die Halteeinrichtung (2) ein Vorlagenglas (2) zum Auflegen der abzutastenden Oberfläche (4) des Sicherheitsdokuments (3) umfasst und die Abtast-(9, 10) und Antenneneinrichtungen (11, 12, 13; 11') in einer parallel zum Vorlagenglas verlaufenden Ebene vorzugsweise geradlinig bewegbar sind.

7. Lesegerät (1) nach einem der vorangehenden Ansprüche, wobei die Abtasteinrichtung (9, 10) ein linienförmiges Sensorarray und insbesondere eine CCD- oder Fotodiodenzeile (9) aufweist.

8. Lesegerät (1) nach einem der vorangehenden Ansprüche, wobei die Abtasteinrichtung (9, 10) eine Beleuchtung (10) umfasst, die ansteuerbar ist zur Abgabe von Licht mit unterschiedlicher spektraler Zusammensetzung und insbesondere von sichtbarem Licht, Infrarotlicht und Ultraviolettlicht, wobei vorzugsweise die Beleuchtung (10) eine Gruppe von LED umfasst.

9. Lesegerät (1) nach einem der vorangehenden Ansprüche mit einer Steuerungseinrichtung (14), die Mittel (15, 16, 17) enthält, um aus den Daten des optisch abgetasteten Bildes von der Oberfläche (4) des Sicherheitsdokuments (3) eine ausgewählte Position der Wicklung (11, 12, 13; 11') der Antenneneinrichtung für die Übertragung von elektromagnetischen Signalen zu dem RFID-Transponder (5) des Sicherheitsdokuments (3) abzuleiten.

10. Lesegerät (1) nach Anspruch 9, das weiterhin Antriebs- und Umschaltmittelmittel enthält, um eine Wicklung (11, 12, 13, 11') der Antenneneinrichtung an der ausgewählten Position für die Übertragung der elektromagnetischen Signale bereit zu stellen.

11. Lesegerät (1) nach Anspruch 8 oder 9, mit zusätzlichen Mitteln zum Ansteuern einer Anzeigeeinrichtung, die dem Benutzer eine Lage für das Sicherheitsdokument (3) auf der Halteeinrichtung (2) angibt, falls die bevorzugte Position nicht aus dem zugeführten Bild zuverlässig bestimmbar ist.

12. Lesegerät (1) nach einem der Ansprüche 9 bis 11, wobei die Steuerungseinrichtung (14) weiterhin Mittel zur Durchführung eines kryptografischen Protokolls aufweist, mit denen ein zum Zugriff auf die Daten in einem RFID-Transponder eines Sicherheitsdokuments (3) erforderliches Protokoll ausführbar ist, wobei die Steuerungseinrichtung (14) vorzugsweise weiterhin Mittel aufweist, um aus den Daten des optisch abgetasteten Bildes von der Oberfläche (4) des Sicherheitsdokuments (3) einen Schlüssel für das kryptografische Protokoll abzuleiten.

13. Verfahren zum Erfassen eines Sicherheitsdokuments (3) mit einem integrierten RFID-Transponder (5) durch ein Lesegerät (1) mit einer optischen Abtasteinrichtung (9, 10) und einer Antenneneinrichtung (11, 12, 13; 11') mit einer Anzahl von Wicklungen, umfassend Schritte zum:
- Abtasten eines optischen Bildes von einer abzutastenden Oberfläche (4) des Sicherheitsdokuments (3) mit der optischen Abtasteinrichtung (9, 10);
- Bewegen der Antenneneinrichtung (11, 12, 13; 11') des Lesegeräts zum Bereitstellen einer Wicklung an einer ausgewählten Position in Bezug auf die abzutastende Oberfläche (4), wobei die Antenneneinrichtung (11, 12, 13; 11') in einer ersten Richtung zusammenhängend mit der Abtasteinrichtung (9, 10) und in einer zweiten Richtung unabhängig von der Abtasteinrichtung (9, 10) bewegt wird;
- Übertragen von elektromagnetischen Signalen zwischen der Wicklung (11, 12, 13; 11) an der ausgewählten Position und der Antenne des RFID-Transponders (5) zum Austausch von Daten zwischen dem Sicherheitsdokument (3) und dem Lesegerät (1).

14. Verfahren nach Anspruch 13, worin das Bereitstellen der Wicklung (11, 12, 13; 11') der Antenneneinrichtung an einer ausgewählten Position in Bezug auf die abzutastende Oberfläche (4) auf eine Verbesserung hinsichtlich der Qualität und/oder Zuverlässigkeit der Übertragung der elektromagnetischen Signale und insbesondere auf eine Erhöhung der empfangenen Signalstärken zielt, worin vorzugsweise in einem zusätzlichen Schritt aus dem mit der Abtasteinrichtung (9, 10) abgetasteten optischen Bild die ausgewählte Position abgeleitet wird.

15. Verfahren nach einem der Ansprüche 13 bis 14, worin beim Austausch der Daten zwischen dem Lesegerät (1) und dem RFID-Transponder (5) ein kryptografisches Protokoll ausgeführt wird, worin vorzugsweise in einem zusätzlichen Schritt aus dem mit der Abtasteinrichtung (9,10) abgetasteten Bild ein Schlüssel oder eine Kennung für das kryptografische Protokoll abgeleitet wird.

## Claims

1. A read device (1) for detecting security documents (3) having an integrated RFID transponder (4), comprising a holding unit (2) for aligning and holding the security document, a scanning unit (9, 10) for optically scanning an image of a surface (4) of the security document, and an antenna unit (11, 12, 13; 11') for transmitting electromagnetic signals between the RFID transponder and the read device, the antenna unit being movable with respect to the holding unit, **characterized in that** the antenna unit (11, 12, 13; 11') can be moved in a first direction in conjunction with the scanning unit (9, 10) and in a second direction independently from the scanning unit (9, 10).

2. The read device (1) according to claim 1, wherein the scanning unit (9, 10) and the antenna unit (11, 12, 13; 11') are arranged on a shared slide (8).

3. The read device (1) according to any one of the preceding claims, wherein the scanning unit (9, 10) is arranged between the holding unit (2) and the antenna unit (11, 12, 13; 11').

4. The read device (1) according to any one of the preceding claims, wherein the scanning unit (9, 10) is line-shaped, and the antenna unit comprises a plurality of windings (11, 12, 13) arranged along or parallel to the expansion of the line-shaped scanning unit (9, 10), adjoining windings (11, 12, 13) preferably overlapping partially.

5. The read device (1) according to any one of the preceding claims, wherein the antenna unit comprises a plurality of flat and preferably rectangular windings (11, 12, 13; 11'), which extend in a plane parallel to the plane of the surface (4) of the security document (3) to be represented.

6. The read device (1) according to any one of the preceding claims, wherein the holding unit (2) comprises a platen glass (2) for placing thereon the surface (4) of the security document (3) to be scanned, and the scanning units (9, 10) and antenna units (11, 12, 13; 11') can be moved in a preferably rectilinear manner in a plane extending parallel to the platen glass.

7. The read device (1) according to any one of the preceding claims, wherein the scanning unit (9, 10) comprises a line-shaped sensor array, and in particular a CCD or photo diode array (9).

8. The read device (1) according to any one of the preceding claims, wherein the scanning unit (9, 10) comprises an illumination unit (10), which can be activated to emit light having different spectral compositions, and in particular visible light, infrared light and ultraviolet light, the illumination unit (10) preferably comprising a group of LEDs.

9. The read device (1) according to any one of the preceding claims, comprising a control unit (14) including means (15, 16, 17) for deriving a selected position of the winding (11, 12, 13; 11') of the antenna unit from the data of the optically scanned image of the surface (4) of the security document (3) for transmitting electromagnetic signals to the RFID transponder (5) of the security document (3).

10. The read device (1) according to claim 9, furthermore comprising drive and switching means for providing a winding (11, 12, 13; 11') of the antenna unit in the selected position for the transmission of the electromagnetic signals.

11. The read device (1) according to claim 8 or 9, comprising additional means for activating a display unit, which indicates to the user a position for the security document (3) on the holding unit (2) if the preferred position cannot be determined from the supplied image.

12. The read device (1) according to any one of claims 9 to 11, wherein the control unit (14) furthermore comprises means for carrying out a cryptographic protocol by way of which a protocol required for accessing the data in an RFID transponder of a security document (3) can be executed, the control unit (14) preferably furthermore comprising means for deriving a key for the cryptographic protocol from the data of the optically scanned image of the surface (4) of the security document (3).

13. A method for detecting a security document (3) having an integrated RFID transponder (5) by a read device (1) comprising an optical scanning unit (9, 10) and an antenna unit (11, 12, 13; 11') including a plurality of windings, comprising steps for:
- scanning an optical image of a surface (4) of the security document (3) to be scanned by the optical scanning unit (9, 10);
- moving the antenna unit (11, 12, 13; 11') of the read device for providing a winding in a selected position relative to the surface (4) to be scanned, the antenna unit (11, 12, 13; 11') being moved in a first direction in conjunction with the scanning unit (9, 10) and in a second direction independently from the scanning unit (9, 10); and
- transmitting electromagnetic signals between the winding (11, 12, 13; 11) in the selected position and the antenna of the RFID transponder (5) for exchanging data between the security document (3) and the read device (1).

14. The method according to claim 13, wherein the provision of the winding (11, 12, 13; 11') of the antenna unit in a selected position relative to the surface (4) to be scanned is aimed at improving the quality and/or reliability of the transmission of the electromagnetic signals, and in particular at increasing the received signal strengths, preferably in an additional step the selected position being derived from the optical image scanned by the scanning unit (9, 10).

15. The method according to any one of claims 13 to 14, wherein a cryptographic protocol is executed during the exchange of the data between the read device (1) and the RFID transponder (5), preferably in an additional step a key or an identifier for the cryptographic protocol being derived from the image scanned by the scanning unit (9, 10).

## Revendications

1. Appareil de lecture (1) destiné à la détection de documents de sécurité (3) avec un transpondeur RFID (4) intégré, présentant un dispositif de support (2) pour disposer et porter le document de sécurité, un dispositif d'exploration (9, 10) pour le balayage optique d'une image d'une surface (4) du document de sécurité et un dispositif d'antennes (11, 12, 13 ; 11') destiné à la transmission de signaux électromagnétiques entre le transpondeur RFID et l'appareil de lecture, le dispositif d'antennes étant mobile par rapport au dispositif de support, **caractérisé en ce que** le dispositif d'antennes (11, 12, 13 ; 11') est mobile dans une première direction en coordination avec le dispositif d'exploration (9, 10) et dans une deuxième direction de manière indépendante par rapport au dispositif d'exploration (9, 10).

2. Appareil de lecture (1) selon la revendication 1, dans lequel le dispositif d'exploration (9, 10) et le dispositif d'antennes (11, 12, 13 ; 13') sont disposés sur un chariot (8) commun.

3. Appareil de lecture (1) selon l'une des revendications précédentes, dans lequel le dispositif d'exploration (9, 10) est disposé entre le dispositif de support (2) et le dispositif d'antennes (11, 12, 13 ; 11').

4. Appareil de lecture (1) selon l'une des revendications précédentes, dans lequel le dispositif d'exploration (9, 10) est en forme de ligne et le dispositif d'antennes comprend plusieurs enroulements (11, 12, 13) qui sont disposés le long ou parallèlement par rapport à l'extension du dispositif d'exploration (9, 10) en forme de lignes, où de préférence des enroulements (11, 12, 13) voisins se superposent partiellement.

5. Appareil de lecture (1) selon l'une des revendications précédentes, dans lequel le dispositif d'antennes comprend un nombre d'enroulements (11, 12, 13 ; 11') plats et de préférence rectangulaires qui s'étendent dans des plans parallèles au plan de la surface (4) du document de sécurité (3) à reproduire.

6. Appareil de lecture (1) selon l'une des revendications précédentes, dans lequel le dispositif de support (2) comprend une plaque de copie (2) pour poser la surface (4) du document de sécurité (3) à balayer et les dispositifs d'exploration (9, 10) et d'antennes (11, 12, 13 ; 11') sont mobiles dans un plan s'étendant parallèlement par rapport à la plaque de copie, de préférence en ligne droite.

7. Appareil de lecture (1) selon l'une des revendications précédentes, dans lequel le dispositif d'exploration (9, 10) présente un réseau de capteurs en forme de lignes et notamment une cellule de dispositif à transfert de charge CCD ou une cellule de photodiode (9).

8. Appareil de lecture (1) selon l'une des revendications précédentes, dans lequel le dispositif d'exploration (9, 10) comprend un système d'éclairage (10) qui peut être mis en route pour la délivrance de lumière avec une composition spectrale variable et notamment de la lumière visible, de la lumière infrarouge et de la lumière ultraviolette, le système d'éclairage (10) comprenant de préférence un groupe de diodes électroluminescentes.

9. Appareil de lecture (1) selon l'une des revendications précédentes, doté d'un dispositif de commande (14), qui contient des moyens (15, 16, 17) pour déduire, à partir des données de l'images balayée optiquement de la surface (4) du document de sécurité (3), une position choisie de l'enroulement (11, 12, 13 ; 11') du dispositif d'antennes pour la transmission de signaux électromagnétiques vers le transpondeur RFID (5) du document de sécurité (3).

10. Appareil de lecture (1) selon la revendication 9, qui contient en outre des moyens de mise en route et de commutation afin de mettre en place un enroulement (11, 12, 13, 11') du dispositif d'antennes à la position choisie pour la transmission des signaux électromagnétiques.

11. Appareil de lecture (1) selon la revendication 8 ou la revendication 9, doté de moyens complémentaires pour la mise en marche d'un dispositif d'affichage qui indique à l'utilisateur une position pour le document de sécurité (3) sur le dispositif de support (2) dans le cas où la position préférée ne peut pas être déterminée avec assurance à partir de l'image présentée.

12. Appareil de lecture (1) selon l'une des revendications 9 à 11, dans lequel le dispositif de commande (14) présente en outre des moyens pour l'exécution d'un protocole cryptographique avec lesquels un protocole nécessaire pour l'accès aux données dans un transpondeur RFID d'un document de sécurité (3) peut être exécuté, où le dispositif de commande (14) présente de préférence en outre des moyens pour déduire une clé pour le protocole cryptographique à partir des données de l'image de la surface (4) du document de sécurité (3) balayée optiquement.

13. Procédé de détection d'un document de sécurité (3) avec un transpondeur RFID (5) intégré par un appareil de lecture (1) doté d'un dispositif d'exploration (9, 10) optique et d'un dispositif d'antennes (11, 12, 13 ; 11') avec un nombre d'enroulements, comprenant des étapes pour :
- le balayage d'une image optique d'une surface (4) d'un document de sécurité (3) à explorer avec un dispositif d'exploration (9, 10) optique ;
- le déplacement du dispositif d'antennes (11, 12, 13 ; 11') de l'appareil de lecture pour la mise en place d'un enroulement à une position choisie en ce qui concerne la surface (4) à explorer, où le dispositif d'antennes (11, 12, 13 ; 11') est déplacé dans une première direction en coordination avec le dispositif d'exploration (9, 10) et dans une deuxième direction de manière indépendante par rapport au dispositif d'exploration (9, 10) ;
- la transmission de signaux électromagnétiques entre l'enroulement (11, 12, 13 ; 11') au niveau de la position choisie et l'antenne du transpondeur RFID (5) pour l'échange de données entre le document de sécurité (3) et l'appareil de lecture (1).

14. Procédé selon la revendication 13, dans lequel la mise en place de l'enroulement (11, 12, 13 ; 11') du dispositif d'antenne au niveau de la position choisie en ce qui concerne la surface (4) à explorer a pour but une amélioration concernant la qualité et/ou la fiabilité de la transmission des signaux électromagnétiques et notamment une augmentation des intensités de signaux reçus, où, en outre, dans une étape supplémentaire, la position choisie est déduite de l'image optique explorée avec le dispositif d'exploration (9, 10).

15. Procédé selon l'une des revendications 13 à 14, dans lequel, lors de l'échange des données entre l'appareil de lecture (1) et le transpondeur RFID (5), un protocole cryptographique est exécuté, dans lequel, de préférence, dans une étape complémentaire, une clé ou un identifiant pour le protocole cryptographique est déduite ou déduit à partir de l'image balayée par le dispositif d'exploration (9, 10).
